# EUROPÄISCHE PATENTANMELDUNG

(11) **EP 1 057 842 A1**
(43) Veröffentlichungstag der Anmeldung: **06.12.2000**
(21) Anmeldenummer: 00108357.5
(22) Anmeldetag: 15.04.2000
(51) Int. Cl.: C08G 18/32, C08G 18/66, C08G 18/79, C09D 175/06

(54) **Verlaufmittel enthaltende hydroxyl- und uretdiongruppenhaltige Polyadditionsprodukte, ein Verfahren zu ihrer Herstellung sowie deren Verwendung zur Herstellung von Polyurethan-Pulverlacken**

(30) Priorität: 02.06.1999 DE 19925287
(71) Anmelder: Degussa-Hüls Aktiengesellschaft, 60287 Frankfurt am Main (DE)
(72) Erfinder: Wenning, Andreas, Dr., 48301 Nottuln (DE); Grenda, Werner, 44627 Herne (DE); Weiss, Jörn Volker, Dr., 45721 Haltern (DE)

(57) **Zusammenfassung**

Die Erfindung betrifft Verlaufmittel enthaltende hydroxyl- und uretdiongruppenhaltige Polyadditionsprodukte, ein Verfahren zu ihrer Herstellung sowie deren Verwendung zur Herstellung hochglänzender, licht- und wetterstabiler Pulverlackfilme mit geringerer Störanfälligkeit der Beschichtungsoberfläche nach Verarbeitung der Pulverlacke insbesondere auf Einschneckenextrudern.

## Beschreibung

Die Erfindung betrifft Verlaufmittel enthaltende hydroxyl- und uretdiongruppenhaltige Polyadditionsprodukte, ein Verfahren zu ihrer Herstellung sowie deren Verwendung zur Herstellung von hochglänzenden, licht- und wetterstabilen Pulverlackfilmen mit geringerer Störanfälligkeit der Beschichtungsoberfläche nach Verarbeitung der Pulverlacke insbesondere auf Einschneckenextrudern.

In der DE-OS 30 30 572 wird ein Verfahren zur Herstellung von uretdiongruppenhaltigen Polyadditionsprodukten sowie die danach hergestellten Produkte vorgestellt. Dabei handelt es sich um Reaktionsprodukte aus dem isocyanuratfreien Uretdion (UD) des 3-Isocyanatomethyl-3,5,5-trimethylcyclohexylisocyanat (auch Isophorondiisocyanat oder kurz IPDI) - herstellbar gemäß der DE-OS 30 30 513 oder 37 39 549 - und Diolen sowie ggf. Monoalkoholen oder -aminen. Die Reaktion kann in Substanz oder auch in Gegenwart geeigneter Lösemittel erfolgen. In der Praxis sind bisher marktrelevante Verkaufsmengen dieser Vernetzerklasse ausschließlich in geeignetem Lösemittel unter schonenden Bedingungen, bei ca. 60 °C, produziert worden, um die thermische Ringöffnung während der Synthese zu vermeiden. Die Herstellung in Substanz ist bisher über den Labormaßstab nicht hinaus gekommen, da sich in Abhängigkeit der Vernetzer-Molmasse im Laufe der Reaktion ein hohes Viskositätsniveau aufbaut; Temperaturerhöhung als Maßnahme zur Viskositätsregulierung ist, wie in der DE-OS 30 30 572 angeführt, limitiert.

Dieses Limit ist auch an den Beispielen der DE-OS 30 30 572 abzulesen: es liegt bei einer Molmasse von maximal 3 000 bzw. einem Uretdion/Diol-Molverhältnis von 5 : 4 bei einer Uretdion-Qualität mit einem freien NCO-Gehalt von 17 und einem NCO-Gehalt von 37,8 Gew.-%. Steigt der freie NCO-Gehalt des Isophorondiisocyanat-Uretdions bei konstantem Gesamt-NCO-Gehalt, d. h. der Oligomerisierungsgrad nimmt gleichzeitig ab und damit auch die Molmasse des eingesetzten Uretdions, so sinkt dementsprechend auch die Molmasse der uretdiongruppenhaltigen Polyadditionsprodukte. Die Herstellung uretdiongruppenhaltiger Polyadditionsprodukte mit hohen Molmassen galt im Sinne der Verwendung, nämlich als Vernetzer für die Herstellung von PUR-Pulverlacken, aus oben genannten Gründen als wenig sinnvoll. Das spiegelt sich auch in der DE-OS 30 30 539 und 30 30 588 wieder. In der DE-OS 30 30 539 sind die Molgewichte zwischen 550 und 4 300, vorzugsweise zwischen 1 500 und 2 000 beansprucht, die Uretdion/Diol-Molverhältnisse liegen zwischen 2 : 1 und 6 : 5, vorzugsweise 3 : 2 und 5 : 4.

In der DE-OS 30 30 588 sind die beanspruchten Molgewichte nur unwesentlich verändert, nämlich von 500 bis 4 000, vorzugsweise 1 450 und 2 800 bei einem der DE-OS 30 30 539 vergleichbarem Uretdion/Diol-Molverhältnis.

Entscheidende Nachteile der abspaltfreien PUR-Pulverlacke nach der Lehre der DE-OS 30 30 539 und DE-OS 30 30 588 waren die begrenzten Kombinationsmöglichkeiten mit hydroxylgruppenhaltigen Polymeren: Zum einen - DE-OS 30 30 539 - waren hohe Funktionalitäten - ≥ 3,4 bis ≤ 7, vorzugsweise 3,7 bis 4,5 - erforderlich, um die für qualitativ hochwertige PUR-Pulverlacke hohe Netzwerkdichte zu erzielen, mußten die kettenabbrechenden Bestandteile des Vernetzers kompensiert werden. Zum anderen - DE-OS 30 30 588 - war dem freien NCO-Gehalt der Vernetzer insofern Rechnung zu tragen, daß die Funktionalität der hydroxylgruppenhaltigen Polymeren auf den freien NCO-Gehalt abzustimmen ist, uni Vergelung während der Extrusion zu vermeiden und damit Qualitätseinbußen der Beschichtungen zu unterdrücken. Die OH-Funktionalität mußte auf ≥ 2,2 bis ≤ 3,5, vorzugsweise von 2,5 bis 3,4 begrenzt werden. Es waren und sind immer noch aufwendige Untersuchungen erforderlich, um Harz und Härter aufeinander abzustimmen.

In der Lehre der DE-OS 30 30 572 werden auch uretdiongruppenhaltige Polyadditionsprodukte mit endständigen OH-Gruppen an einem Beispiel beschrieben und beansprucht. Der Umfang entspricht dem oben genannten Polyadditionsprodukt. Für den PUR-Pulverlacksektor haben die OH-terminierten Polyadditionsprodukte bisher jedoch keine Bedeutung erlangt, da der ökonomische Wert im Vergleich zu den anderen Vernetzern nicht gegeben war; siehe Beispiel 5 der DE-OS 30 30 572 im Vergleich zu den restlichen Beispielen. Die Zahlen sprechen für sich. Diese und chemische Gründe, nämlich die unkontrollierte Polyaddition der freien OH-Gruppen mit NCO-Gruppen, die zusätzlich während der Synthese durch Uretdionspaltung entstehen, waren gute Gründe, dieser Art von Vernetzern keine Bedeutung beizumessen.

Die DE-OS 44 06 444 beschreibt hydroxyl- und uretdiongruppenhaltige Polyadditionsprodukte, die als Vernetzer zur Herstellung abspaltfreier PUR-Pulverlacke geeignet sind, ohne die genannten Nachteile aufzuweisen. Allerdings ist die Verarbeitung dieser Polyadditionsprodukte mit hydroxylgruppenhaltigen Polymeren zu Pulverlacken problematisch. Insbesondere nach der Homogenisierung der pulverförmigen Inhaltsstoffe auf Einschneckenextrudern, aber in Abhängigkeit vom Polymer teilweise auch auf Zweischneckenextrudern, sind die Oberflächen der Beschichtungen durch Nadelstiche oder Krater gestört.

Die EP-A-0 639 598 beschreibt Uretdiongruppen enthaltende Polyadditionsprodukte mit niedriger Schmelzviskosität, die das Problem der Oberflächenstörung in der Pulverlackbeschichtung nicht vollständig lösen.

Die Aufgabe der vorliegenden Erfindung war es daher, neue Vernetzer auf Basis hydroxyl- und uretdiongruppenhaltiger Polyadditionsprodukte zu finden, die in Kombination mit hydroxylgruppenhaltigen Polymeren zu abspaltfreien PUR-Pulverlacken verarbeitet werden können und deren Beschichtungen hochflexibel und glänzend sind und keine Oberflächenstörungen aufweisen.

Überraschenderweise wurde gefunden, daß der Zusatz eines Verlaufmittels zu den hydroxyl- und uretdiongruppenhaltigen Polyadditionsprodukten, wie sie prinzipiell bekannt sind (z. B. aus der DE 44 06 444), die Empfindlichkeit der Oberflächen der inbesondere auf Einschneckenextrudern verarbeiteten Pulverbeschichtungen gegen Störungen wie z. B. Nadelstiche oder Krater beseitigt.

Gegenstand der vorliegenden Erfindung sind daher Verlaufmittel enthaltende hydroxyl- und uretdiongruppenhaltige Polyadditionsprodukte, aufgebaut aus den Ausgangskomponenten
A) 40 bis 81 Gew.-% Uretdion des Isophorondiisocyanats,
B) aliphatische und/oder cycloaliphatische Diole
   und/oder
C) weitere funktionelle Gruppen enthaltende Diole,
   in einer Gesamtmenge von 59,9 bis 14 Gew.-%, wobei das Mischungsverhältnis B) zu C) frei wählbar ist, und eine Komponente auch allein enthalten sein kann,
   und
D) 0,1 bis 5 Gew.-% mindestens eines Verlaufmittels,
   wobei die Polyadditionsprodukte terminal Hydroxylgruppen tragen, eine Funktionalität von 2 aufweisen und die zahlenmittleren Molmassen zwischen 1500 und 10 000 variieren.

Gegenstand der Erfindung ist auch ein Verfuhren zur Herstellung der Verlaufmittel enthaltenden hydroxyl- und uretdiongruppenhaltigen Polyadditionsprodukte, dadurch gekennzeichnet, daß das Uretdion des Isophorondiisocyanats A) in Gegenwart eines oder mehrerer Verlaufmittel D) mit Diolen B) und/oder weitere funktionelle Gruppen enthaltende Diole C) bei Temperaturen von 50 bis 190 °C umgesetzt werden, wobei die Polyadditionsprodukte Hydroxylgruppen tragen, eine Funktionalität von 2 aufweisen und die zahlenmittleren Molmassen zwischen 1500 und 10 000, vorzugsweise 1 500 und 7 000 liegen.

Weiterhin Gegenstand der Erfindung ist auch die Verwendung der Verlaufmittel enthaltenden hydroxyl- und uretdiongruppenhaltigen Polyadditionsprodukte zur Herstellung von abspaltfreien, transparenten oder pigmentierten PUR-Pulverlacken hoher Reaktivität und ausgezeichnetem Glanz, hergestellt aus den blockierungsmittelfreien, Verlaufmittel enthaltenden hydroxyl- und uretdiongruppenhaltigen Polyadditionsprodukten, funktionelle Gruppen enthaltenden Polymeren und den in der PUR-Chemie üblichen Hilfs- und Zuschlagsstoffen.

Gegenstand der Erfindung sind auch abspaltfreie, transparente oder pigmentierte PUR-Pulverlacke, welche die erfindungsgemäßen Verlaufmittel enthaltenden hydroxyl- und uretdiongruppenhaltigen Polyadditionsprodukte enthalten.

Das isocyanuratfreie Uretdion des Isophorondiisocyanats A) ist bei Raumtemperatur hochviskos (Viskosität > 10⁶ mPa·s), bei 60 °C liegt die Viskosität bei 13 · 10³ mPa·s und bei 80 °C bei 1,4 ·10³ mPa·s. Der NCO-Gehalt liegt zwischen 16,8 und 18 Gew.-%, d. h. daß mehr oder minder hohe Anteile an Polyuretdion des IPDI im Reaktionsprodukt vorliegen müssen. Der Monomergehalt liegt bei ≈ 1 %. Der NCO-Gehalt des Reaktionsproduktes nach dem Erhitzen auf 180 -200 °C beträgt 37,5 -37,8 Gew.-%.

Für die Synthese der hydroxyl- und uretdiongruppenhaltigen, erfindungsgemäßen Polyadditionsprodukte eignen sich alle in der PUR-Chemie üblicherweise eingesetzten Diole B), besonders bevorzugt sind hier: Ethylenglykol, Butandiol-1,4, Pentandiol-1,5, Hexandiol-1,6, 3-Methylpentandiol-1,5, 2,2,4 (2,4,4)-Trimethylhexandiol sowie Hydroxypivalinsäureneopentylglykolester.

Als weitere funktionelle Gruppen enthaltende Diole C) eignen sich lineare hydroxylgruppenhaltige Polyester, Polycaprolactone, Polycarbonate, Polyether, Polythioether, Polyesteramide, Polyurethane oder Polyacetale mit niedrigenzahlenmittleren Molekulargewichten von 134 bis 3 500.

Besonders vorteilhaft ist die Verwendung von hydroxylgruppenhaltigen, linearen Polyestern mit einer Molmasse zwischen 250 und 2 000, vorzugsweise 300 bis 1 500. Sie werden hergestellt z. B. durch Kombination von Diolen und Dicarbonsäuren.Zur Herstellung der Diole C) werden bevorzugt neben den o. g. Diolen B) auch 2-Methylpropandiol, 2,2-Dimethylpropandiol, Diethylenglykol, Dodecandiol- 1,12 sowie trans- und cis-Cyclohexandimethanol eingesetzt.Zu den bevorzugten Dicarbonsäuren zählen aliphatische, ggf. alkylverzweigte Dicarbonsäuren wie Bernstein-, Adipin-, Kork-, Azelain- und Sebacinsäure, 2,2,4 (2,4,4)-Trimethyladipinsäure; weiterhin werden auch Hydroxycarbonsäuren wie Hydroxycapronsäure dazu gezählt.

Die Diole werden in einer Gesamtmenge von 59,9 bis 14 Gew.-%, wobei das Mischungsverhältnis B) zu C) frei wählbar ist, und eine Komponente auch allein enthalten sein kann, eingesetzt. Besonders bevorzugt werden die Diole im Gewichtsverhältnis von 5 : 95 bis 90:10 eingesetzt.

Die Verlaufmittel D) sind flüssige Additive auf der Basis von Polyacrylaten oder Siliconen (Polysiloxane). Sie können nichtfunktionell sein, oder funktionelle Gruppen wie z. B. Hydroxylgruppen tragen. Pulverförmige Verlaufadditive, die auf Trägermaterialien wie Siliciumdioxid adsorbiert sind, sind ebenfalls einsetzbar. Beispiele für geeignete Verlaufmittel sind Produkte mit den Handelsnamen Acronal®, Additol®, Byk®, Crylcoat®, Disparlon®, DOW®, DER®, Dynoadd®, Edaplan®, Efka®, EPIKOTE®, Lanco Flow®, Modaflow®, Perenol®, Resiflow® und Troy®. Besonders bevorzugte Verlaufmittel sind Acronal® 4F, Byk®-356, Byk®-361, Byk® LP-G 6527, Crylcoat® 109, Perenol® F 45, Resiflow® FL 2, Resiflow® FM 4, Resiflow® PV 5, Resiflow® PV 88 und Resiflow® CP 77.

Die Herstellung der erfindungsgemäßen Verlaufmittel enthaltenden hydroxyl- und uretdiongruppenhaltigen Polyadditionsprodukte kann sowohl im Lösemittel als auch in Substanz, also lösemittelfrei, erfolgen.

Die Umsetzung im Lösemittel erfolgt im allgemeinen bei Temperaturen von 50 bis 100 °C, vorzugsweise zwischen 60 und 90 °C. Die Diolkomponente wird vorgelegt und das IPDI-Uretdion A) so rasch wie möglich zugesetzt, ohne daß die Reaktionstemperatur die o. g. Grenzen überschreitet. Die Umsetzung ist nach 30 bis 150 Minuten beendet. Das Verlaufmittel D) kann während der Reaktion anwesend sein als auch nach beendeter Reaktion zugegeben werden Anschließend wird das Lösemittel entfernt. Dazu geeignet sind z. B. Abdampfschnecken, Filmtruder oder Sprühtrockner. Die nachträgliche Einarbeitung des Verlaufmittels zum in Lösung hergestellten und vom Lösemittel befreiten pulverförmigen hydroxyl- und uretdiongruppenhaltigen Polyadditionsprodukt ist ebenfalls möglich.

Geeignete Lösemittel sind Benzol, Toluol oder andere aromatische bzw. aliphatische Kohlenwasserstoffe, Essigester wie Ethylacetat oder Butylacetat, auch Ketone wie Aceton, Methylethylketon, Methylisobutylketon oder chlorierte aromatische und aliphatische Kohlenwasserstoffe sowie beliebige Gemische dieser oder anderer gegenüber den reaktiven Gruppen der erfindungsgemäßen Zusammensetzung inerter Lösemittel.

Zur Beschleunigung der Polyadditionsreaktion können auch die in der PUR-Chemie üblichen Katalysatoren verwendet werden. Als besonders geeignet erwiesen sich Zinn-II-und -IV-verbindungen. Genannt sind hier besonders Dibutylzinndilaurat (DBTL). Sie werden in einer Konzentration von 0,01 bis 1 Gew.-%, vorzugsweise von 0,03 bis 0,5 Gew.-% bezogen auf die eingesetzten Reaktionskomponenten eingesetzt.

Ein weiterer Gegenstand der Erfindung stellt die lösemittelfreie und kontinuierliche Herstellung der erfindungsgemäßen Verlaufmittel enthaltenden hydroxyl- und uretdiongruppenhaltigen Polyadditionsprodukte mittels Intensivkneter, insbesondere in einem Ein- oder Mehrschneckenextruder, dar. Die lösemittelfreie Synthese erfordert Temperaturen zwischen 120 °C und 190 °C. Diese Temperaturen liegen bereits deutlich im Respaltbereich für Uretdione, ohne daß jedoch hohe freie Isocyanatgehalte resultierten und damit unkontrollierte Reaktionsabläufe zu beobachten waren. Als vorteilhaft erwiesen sich dabei die kurzen Reaktionszeiten von < 5 Minuten, vorzugsweise < 3 Minuten, insbesondere <2 Minuten.

Weiterhin von prinzipieller Natur ist, daß die kurzzeitige thermische Belastung ausreicht, um die Reaktionspartner homogen zu mischen und dabei vollständig oder weitestgehend umzusetzen. Anschließend wird entsprechend der Gleichgewichtseinstellung gezielt abgekühlt und falls erforderlich, der Umsatz vervollständigt.

Die Umsetzungsprodukte werden dem Intensivkneter in getrennten Produktströmen zugeführt, wobei die Ausgangskomponenten bis auf maximal 100 °C, vorzugsweise bis auf maximal 80 °C, vorgewärmt werden können. Handelt es sich um mehr als zwei Produktströme, können diese auch gebündelt zudosiert werden. Diol B), weitere funktionelle Gruppen enthaltende Diole C), Verlaufmittel D) und Katalysatoren können auch zu einem Produktstrom zusammengefaßt werden. Ebenfalls kann die Reihenfolge der Produktströme variabel gehandhabt werden sowie die Eintrittsstelle für die Produktströme unterschiedlich sein.

Zur Nachreaktion, Abkühlung, Zerkleinerung und Absackung werden bekannte Verfahren und Technologien verwendet.

Ein weiterer Gegenstand der vorliegenden Erfindung ist die Verwendung der Verlaufmittel enthaltenden hydroxyl- und uretdiongruppenhaltigen Polyadditionsprodukte zur Herstellung von abspaltfreien, transparenten oder pigmentierten PUR-Pulverlacken mit hoher Reaktivität und ausgezeichnetem Glanz. Im Vergleich zu analog aufgebauten Vernetzern, die kein Verlaufmittel beinhalten, zeichnen sich die daraus hergestellten Beschichtungen überraschenderweise durch das Fehlen von Oberflächendefekten aus.

Gegenstand der Erfindung sind auch abspaltfreie, transparente oder pigmentierte PUR-Pulverlacke, welche die erfindungsgemäßen Verlaufmittel enthaltenden hydroxyl- und uretdiongruppenhaltigen Polyadditionsprodukte, funktionelle Gruppen enthaltende Polymere und weitere in der PUR-Chemie übliche Hilfs- und Zuschlagsstoffen enthalten.

Als funktionelle Gruppen enthaltende Polymere kommen Verbindungen infrage, welche solche funktionellen Gruppen tragen, die sich mit Isocyanatgruppen während des Härtungsprozesses in Abhängigkeit von der Temperatur und Zeit umsetzen, z. B. Hydroxyl-, Carboxyl-, Mercapato-, Amino-, Urethan-(Thio)-Harnstoffgruppen. Als Polymere können Polymerisate, Polykondensate und Polyadditionsverbindungen eingesetzt werden.

Bevorzugte Komponenten sind in erster Linie Polyether, Polythioether, Polyacetale, Polyesteramide, Polyharnstoffe, Epoxidharze mit Hydroxylgruppen im Molekül, Aminoplaste und ihre Modifizierungsprodukte mit polyfunktionellen Alkoholen, Polyazomethine, Polyurethane, Polysulfonamide, Melaminabkömmlinge, Celluloseester und -ether, teilweise verseifte Homo- und Copolymerisate von Vinylestern, insbesondere aber hydroxylgruppenhaltige Polyester und Acrylatharze.

Die eingesetzten hydroxylgruppenhaltigen Polyester haben eine OH-Funktionalität von > 2, eine OH-Zahl von 20 bis 200 mg KOH/g, vorzugsweise von 30 bis 150 mg KOH/g, eine Viskosität von < 60 000 mPa·s, vorzugsweise < 40 000 mPa·s bei 140 °C und einen Schmelzpunkt VON > 70 °C bis ≤ 120 °C, vorzugsweise von 75 °C bis 100 °C.

Für die Herstellung von Polyestern bevorzugte Carbonsäuren können aliphatischer, cycloaliphatischer, aromatischer und/oder herterocyclischer Natur sein und gegebenenfalls durch Halogenatome substituiert und/oder ungesättigt sein. Als Beispiele hierfür seien genannt: Bernstein-, Adipin-, Kork-, Azelain, Sebacin-, Phthal-, Terephthal-, Isophthal-, Trimellit-, Pyromellit-, Tetrahydrophthal-, Hexahydrophthal-, Hexahydroterephthal-, Di- und Tetrachlorphthal-, Endomethylentetrahydrophthal-, Glutar-, Malein- und Fumarsäure bzw. - soweit zugänglich - deren Anhydride, Terephthalsäuredimethylester, Terephthalsäure-bis-glykolester, weiterhin cyclische Monocarbonsäure wie Benzoesäure, p-tert.-Butylbenzoesäure oder Hexahydrobenzoesäure.

Als mehrwertige Alkohole kommen z. B. Ethylenglykol, Propylenglykol-1,2 und -1,3, Butylenglykol- 1,4 und -2,3, Di-β-hydroxyethylbutandiol, Hexandiol- 1,6, Octandiol-1,8, Neopentylglykol, Cyclohexandiol, Bis-(1,4-hydroxymethyl)-cyclohexan, 2,2-Bis-(4-hydroxycyclohexyl)-propan, 2,2-Bis-[4-(β-hydroxyethoxy)-phenyl]-propan, 2-Methylpropandiol- 1,3, 3-Methyl-pentandiol- 1,5, 2,2,4(2,4,4)-Trimethylhexandiol- 1,6, Glycerin, Trimethylolpropan, Trimethylolethan, Hexantriol-1,2,6, Butantriol-1,2,4, Tris-(β-hydroxyethyl)-isocyanurat, Pentaerythrit, Mannit und Sorbit sowie Diethylenglykol, Triethylenglykol, Tetraethylenglykol, Dipropylenglykol, Polypropylenglykole, Polybutylenglykole, Xylylenglykol und Hydroxypivalinsäureneopentylglykolester, infrage.

Auch die folgenden Mono- und Polyester sind prinzipiell einsetzbar:

Polyester aus Lactonen, z. B. ∈-Caprolacton, oder aus Hydroxycarbonsäuren, z. B. Hydroxypivalinsäure, α -Hydroxydecansäure, α -Hydroxycapronsäure, Thioglykolsäure; Polyester aus den obengenannten Polycarbonsäuren oder deren Derivaten und Polyphenolen, wie Hydrochinon, Bisphenol-A, 4,4'-Dihydroxybiphenyl oder Bis-(4-hydroxyphenyl)-sulfon; Polyester der Kohlensäure, die aus Hydrochinon, Diphenylolpropan, p-Xylylenglykol, Ethylenglykol, Butandiol oder Hexandiol-1,6 und anderen Polyolen durch übliche Kondensationsreaktionen, z. B. mit Phosgen oder Diethyl- bzw. Diphenylcarbonat, oder aus cyclischen Carbonaten wie Glykolcarbonat oder Vinylidencarbonat, durch Polymerisation in bekannter Weise erhältlich sind; Polyester der Kieselsäure; Polyester der Phosphorsäure; Polyester der Borsäure.

Ebenfalls einsetzbar sind Polysiloxane, wie z. B. die durch Hydrolyse von Dialkyldichlorsilanen mit Wasser und nachfolgende Behandlung mit Polyalkoholen, oder die durch Anlagerung von Polysiloxandihydriden an ungesättigte Alkohole, erhältlichen Produkte.

Bevorzugte Polyester sind z. B. auch die Reaktionsprodukte von Polycarbonsäuren und Glycidylverbindungen, wie sie z. B. in der DE-OS 24 10 513 beschrieben sind.

Beispiele für Glycidylverbindungen, die verwendet werden können, sind Ester des 2,3-Epoxy-1-propanols mit monobasischen Säuren, die 4 bis 18 Kohlenstoffatome haben, wie Glycidylpalmitat, Glycidyllaurat und Gylcidylstearat, Alkylenoxide mit 4 bis 18 Kohlenstoffatomen, wie Butylenoxid und Glycidylether, wie Octylglycidylether.

Als Dicarbonsäuren können bei diesem Verfahren sämtliche unter II im folgenden aufgeführte Polycarbonsäuren verwendet werden, Monocarbonsäuren, welche beispielsweise unter III aufgeführt sind, können ebenfalls eingesetzt werden.

Bevorzugte Komponenten sind auch monomere Ester, z. B. Dicarbonsäure-bis-(hydroxy(alkohol)ester, Monocarbonsäureester von mehr als zweiwertigen Polyolen und Oligoester, die durch Kondensationsreaktionen aus in der Lackchemie üblichen Rohstoffen hergestellt werden können. Als solche sind z. B. anzusehen:
I. Alkohole mit 2 bis 24, vorzugsweise 2 bis 10 C-Atomen, und 2 bis 6 an nichtaromatischen C-Atomen gebundenen OH-Gruppen, z. B. Ethylenglykol, Propylenglykol, Diethylenglykol, Dipropylenglykol, Butandiole, Neopentylglykol, Hexandiole, Hexantriole, Perhydrobisphenol, Dimethylolcyclohexan, Glycerin, Trimethylolethan, Trimethylolpropan, Pentaerythrit, Dipentaerythrit, Mannit;
II. Di- und Polycarbonsäuren mit 4 bis 36 C-Atomen und 2 bis 4 Carboxylgruppen sowie deren veresterungsfähige Derivate, wie Anhydride und Ester, z. B. Phthalsäure(anhydrid), Isophthalsäure, Terephthalsäure, Alkyltetrahydrophthalsäure, Endomethylentetrahydrophthalsäureanhydrid, Adipinsäure, Bernsteinsäure, Maleinsäure, Fumarsäure, Dimerfettsäuren, Trimellithsäure, Pyromellitsäure, Azelainsäure;
III. Monocarbonsäuren mit 6 bis 24 C-Atomen, z. B. Caprylsäure, 2-Ethylhexansäure, Benzoesäure, p-tert.-Butylbenzoesäure, Hexahydrobenzoesäure, Monocarbonsäuregemische natürlicher Öle und Fette, wie Cocosfettsäure, Sojaölfettsäure, Ricinenfettsäure, hydrierte und isomerisierte Fettsäuren, wie "Konjuvandol"-Fettsäure sowie deren Gemische, wobei die Fettsäuren auch als Glyceride einsetzbar sind und unter Umesterung und/oder Dehydratisierung umgesetzt werden können.;
IV. einwertige Alkohole mit 1 bis 18 C-Atomen, z. B Methanol, Ethanol, Isopropanol, Cyclohexanol, Benzylalkohol, Isodecanol, Nonanol, Octanol, Oleylalkohol.

Die Polyester können auf an sich bekannte Weise durch Kondensation in einer Inertgasatmosphäre bei Temperaturen von 100 bis 260 °C, vorzugsweise 130 bis 220 °C, in der Schmelze oder in azeotroper Fahrweise gewonnen werden, wie es z. B. in Methoden der Organischen Chemie (Houben-Weyl), Bd. 14/2, 1 - 5, 21 23, 40 44, Georg Thieme Verlag, Stuttgart, 1963 oder bei C. R. Martens, Alkyd Resins, 51 - 59, Reinhold Plastics Appl. Series, Reinhold Publishing Comp., New York, 1961, beschrieben ist.

Bevorzugte hydroxylgruppenhaltige Acrylatharze, welche als OH-Komponente verwendet werden können, sind Homo- oder Copolymerisate, wobei z. B. folgende Monomere als Ausgangsprodukte gewählt werden können: Ester der Acrylsäure und Methacrylsäure mit zweiwertigen, gesättigten, aliphatischen Alkoholen mit 2 bis 4 C-Atomen, wie z. B. 2-Hydroxyethylacrylat, 2-Hydroxypropylacrylat, 4-Hydroxybutylacrylat und die entsprechenden Methacrylsäureester; Acrylsäure und Methacrylsäurealkylester mit 1 bis 18 C-Atomen in der Alkoholkomponente, wie z. B. Methacrylat, Ethylacrylat, Propylacrylat, Isopropylacrylat, n-Butylacrylat, tert.-Butylacrylat, 2-Ethylhexylacrylat, Stearylacrylat und die entsprechenden Methacrylatsäureester; Acrylsäure- und Methacrylsäurecyclohexylester; Acrylnitril und Methacrylnitril, Acrylamid und Methacrylamid; N-Methoxymethyl(meth)acrylsäureamid.

Besonders bevorzugte Acrylatharze sind Copolymere aus
a. 0 bis 50 Gew.-% Ester der Acryl- oder Methacrylsäure mit zwei oder mehrwertigen Alkoholen, wie Butandiol-(1,4)-monoacrylat, Hydroxypropyl(meth)acrylat; ferner Vinylglykol, Vinylthioethanol, Allylalkohol, Butandiol- 1,4-monovinylether;
b. 5 bis 95 Gew.-% Ester der Acrylsäure oder Methacrylsäure mit einwertigen Alkoholen, die 1 bis 12 Kohlenwasserstoffatome enthalten, wie z. B. Methylmethacrylat, Ethylacrylat, n-Butylacrylat oder 2-Ethylhexylacrylat;
c. 0 bis 50 Gew.-% aromatische Vinylverbindungen, wie Styrol, Methylstyrol oder Vinyltoluol;
d. 0 bis 20 Gew.-% andere Monomere mit funktionellen Gruppen, wie z. B. Acrylsäure, Methacrylsäure, Crotonsäure, Itaconsäure, Maleinsäure, Fumarsäure, Maleinsäureanhydrid, Maleinsäurehalbester, Acrylamid, Methacrylamid, Acrylnitril oder N-Methylol(meth)acrylamid sowie Gycidyl(meth)acrylat, wobei der Anteil der Gruppe a. und/oder b. mindestens 5 Gew.-% betragen.

Die Acrylatharze können nach den üblichen Methoden hergestellt werden, also durch Lösungs-, Suspensions-, Emulsions- oder Fällungspolymerisation; bevorzugt aber durch Substanzpolymerisation, die ihrerseits mittels UV-Licht initiiert werden kann.

Als weitere Polymerisationsinitiatoren werden die üblichen Peroxide oder Azoverbin dungen, wie z. B. Dibenzoylperoxid, tert.-Butylperbenzoat oder Azobiisobutyronitril verwendet. Das Molekulargewicht kann z. B. mit Schwefelverbindungen, wie tert.-Dodecylmercaptan, geregelt werden.

Bevorzugte Polyether können z. B. durch Polyaddition von Epoxiden, wie Ethylenoxid, Propylenoxid, Butylenoxid, Trimethylenoxid, 3,3-Bis-(chlormethyl)-oxacyclobutan, Tetrahydrofuran, Styroloxid, dem Bis-(2,5)-epoxypropylether des Diphenylolpropans oder Epichlorhydrin mit sich selbst, z. B. in Gegenwart von BF₃, oder durch Anlagerung dieser Epoxide, gegebenenfalls im Gemisch oder nacheinander, an Startkomponenten mit reaktionsfähigen Wasserstoffatomen, wie Alkohole oder Amine, z. B. Wasser, Ethylenglykol, Propylenglykol-(1,3) oder -(1,2), Pentamethylenglykol, Hexandiol, Decamethylengylkol, Trimethylolpropan, 4,4'-Dihydroxydiphenylpropan, Anilin, Ammoniak, Ethanolamin, Ethylendiamin, Di(β-hydroxypropyl)-methylamin, Di-(β-hydroxyethyl)-anilin, Hydrazin sowie auch hydroxyalkylierten Phenolen, wie z. B. Di-(β-hydroxyethoxy)-resorcin, hergestellt werden.

Ebenso können hydroxylgruppenhaltige Polyurethane und/oder Polyharnstoffe eingesetzt werden.

Als Polyhydroxylverbindungen können selbstverständlich auch Gemische mehrerer Stoffe eingesetzt werden.

Das Mischungsverhältnis der hydroxylgruppenhaltigen Polymeren und erfindungsgemäßen Verlaufmittel enthaltenden hydroxyl- und uretdiongruppenhaltigen Polyadditionsprodukte (Vernetzern) wird in der Regel so gewählt, daß auf eine OH-Gruppe 0,5 - 1,2, bevorzugt 0,8 - 1,1, ganz besonders bevorzugt 1,0 NCO-Gruppe kommt.

Um die Geliergeschwindigkeit der hitzehärtbaren PUR-Pulverlacke zu erhöhen, kann man Katalysatoren zusetzen. Als Katalysatoren verwendet man Organozinnverbindungen wie Dibutylzinndilaurat (DBTL), Sn(II)-octoat, Dibutylzinnmaleat usw. Die Menge an zugesetztem Katalysator beträgt 0,05 - 5 Gew.-% bezogen auf die Menge des Pulverlackes.

Die erfindungsgemäßen Verlaufmittel enthaltenden hydroxyl- und uretdiongruppen haltigen Polyadditionsprodukte werden für die Herstellung von PUR-Pulverlacken mit dem geeigneten hydroxylgruppenhaltigen Polymeren und gegebenenfalls Katalysatoren sowie Pigmenten und Füllstoffen gemischt. Erfindungswesentlich ist die weitere Zugabe von festen oder flüssigen Verlaufmitteln. Zur Erzielung von Beschichtungen mit störungsfreien Oberflächen reicht es nicht aus, die gesamte Menge an Verlaufmittel in das hydroxyl- und uretdiongruppenhaltige Polyadditionsprodukt einzuarbeiten. Bei flüssigen Verlaufmitteln erfolgt die Zugabe als Masterbatch mit dem hydroxylgruppenhaltigen Polymeren. Die Menge an Verlaufmittel im Vernetzer und im Harz beträgt, bezogen auf die gesamte Pulvermenge, bis zu 3 Gew.-%. Alle Inhaltsstoffes des Pulverlackes werden in der Schmelze homogenisiert. Dies kann in geeigneten Aggregaten, wie z. B. beheizbaren Knetern, vorzugsweise jedoch durch Extrudieren, erfolgen, wobei Temperaturobergrenzen von 130 bis 140 °C nicht überschritten werden sollten. Die extrudierte Masse wird nach Abkühlen auf Raumtemperatur und nach geeigneter Zerkleinerung zum sprühfertigen Pulver vermahlen. Das Auftragen des sprühfertigen Pulvers auf geeignete Substrate kann nach den bekannten Verfahren, wie z. B. durch elektrostatisches oder tribostatisches Pulversprühen, Wirbelsintern, elektrostatisches Wirbelsintern, erfolgen. Nach dem Pulverauftrag werden die beschichteten Werkstücke zur Aushärtung 60 bis 10 Minuten auf eine Temperatur von 160 bis 220 °C, vorzugsweise 30 bis 10 Minuten bei 180 bis 200 °C, erhitzt. Reaktivitätseinbußen im Vergleich zu den PUR-Pulverlacken, die kein Verlaufmittel im Vernetzer enthalten, gibt es nicht.

Die erfindungsgemäßen Produkte, das Verfahren der erfindungsgemäßen Produkte sowie die erfindungsgemäßen PUR-Pulverlacke sowie das Verfahren zur Herstellung der erfindungsgemäßen PUR-Pulverlacke werden nachfolgend anhand von Beispielen beschrieben.

### Beispiele

### A Herstellung der erfindungsgemäßen Verlaufmittel enthaltenden hydroxyl- und uretdiongruppenhaltigen Polyadditionsprodukte

### A 1 Uretdion des Isophorondiisocyanats A)

Das nach bekanntem Verfahren produzierte IPDI-Uretdion haue folgende NCO-Kenndaten:
frei: 16,8 - 18,5 Gew.-% gesamt: 37,0 - 37,8 Gew.-%

### A 2 Weitere funktionelle Gruppen enthaltende Diole C)

### Allgemeine Herstellungsvorschrift

Die Ausgangskomponenten - vgl. Tabelle 1 - werden in einen Reaktor gegeben und mit Hilfe eines Ölbades auf ≈ 140 °C erhitzt. Nachdem die Stoffe zum größten Teil geschmolzen sind, werden 0,1 Gew.-% Di-n-butylzinnoxid als Katalysator zugesetzt. Die erste Wasserabspaltung tritt bei 150 bis 160 °C auf Innerhalb von 2 bis 3 Stunden wird die Temperatur auf 180 °C bis 190 °C erhöht und die Veresterung während weiteren 8 bis 10 Stunden zu Ende gebracht. Während der gesamten Reaktionszeit wird das Sumpfprodukt gerührt und ein schwacher Stickstoffstrom durch das Reaktionsgemisch geleitet. Die Säurezahl der Polyester lag stets < 2 mg KOH/g.

**Tabelle 1**

| Weitere funktionelle Gruppen enthaltende Diole C) | | | | | | |
|---|---|---|---|---|---|---|
| Beispiel Nr. | Ausgangskomponenten | | | | Kenndaten | |
| | AS [mol] | NPG [mol] | P [mol] | HD [mol] | OH-Zahl [mg KOH/g] | Viskosität [25 °C] [mPa·s] |
| A 2.1 | 4 | 3 | - | 2 | 106±7 | ≈3500 |
| A 2.2 | 1 | 2 | - | - | 335±15 | ≈1500 |
| A 2.3 | 1 | - | 2 | - | 217±10 | n.b. |
| A 2.4 | Polycaprolacton Capa 200 (Fa. Interox) | | | | 216 | Schmelzbereich 18-23 °C |

Die Abkürzungen in der Tabelle 1 bedeuten:
- AS:: Adipinsäure
- HD:: Hexandiol-1,6
- NPG:: Neopentylglykol
- P:: Pentandiol-1,5
- n.b.:: nicht bestimmt

### A 3 Verlaufmittel enthaltende hydroxyl- und uretdiongruppenhaltigen Polyadditionsprodukte

### Allgemeine Herstellungsvorschriften

### A 3.1 Aus Lösemittel

Die Diol-Komponente B) und/oder C) - vgl. Tabelle 2 - der Katalysator (0,03 - 0,5 Gew.-% DBTL) und das Verlaufmittel (0,1 - 5 Gew.-%) werden, gelöst im Lösemittel, im Reaktor vorgelegt Unter starkem Rühren und Inertgasatmosphäre wird die berechnete Menge IPDI-Uretdion, gelöst im Lösemittel, so schnell zugesetzt, daß die Reaktionstemperatur 100 °C nicht übersteigt. Die Umsetzung wird mittel titrimetrischer NCO-Bestimmung kontrolliert; sie ist nach 1 bis 3 Stunden beendet. Danach wird das Lösemittel entfernt, das Produkt abgekühlt und ggf. zerkleinert.

### A 3.2 Lösemittelfrei

In die Einzugsgehäuse eines Doppelschneckenextruders wurde das IPDI-Uretdion mit einer Temperatur von 60 bis 110 °C eingespeist, wobei gleichzeitig die Diol-Komponente B) und/oder C) - vgl. Tabelle 2- mit einer Temperatur von 25 bis 110 °C zudosiert wurde. Das Verlaufmittel (0,1 - 5 Gew. -%) wurde separat zudosiert. Das Uretdion bzw. die Diolkomponente enthielt ggf. die erforderliche Katalysatormenge von 0,03 bis 0,5 Gew.-% DBTL bezogen auf das Endprodukt.

Der eingesetzte Extruder setzte sich aus zehn Gehäusen zusammen, davon fünf Heizzonen. Die Temperaturen der Heizzonen unterlagen einem großen Bereich - zwischen 50 und 180 °C - und konnten einzeln gesteuert werden. Alle Temperaturen waren Soll-Temperaturen, die Regelung in den Gehäusen erfolgte durch elektrische Heizung und pneumatische Kühlung. Das Düsenelement wurde mittels Ölthermostat beheizt. Die Drehzahl der Doppelschnecke, aufgebaut mit Förderelementen, lag zwischen 50 und 380 U/min.

Das Reaktionsprodukt, das von 10 bis 130 kg/h anfällt, wurde entweder abgekühlt, anschließend zerkleinert oder formiert und abgesackt oder bereits die Schmelze formiert, abgekühlt und abgesackt.

Die physikalischen und chemischen Kenndaten der erfinderischen Verfahrensprodukte sowie die molaren Zusammensetzungen sind in Tabelle 2 zusammengefaßt.

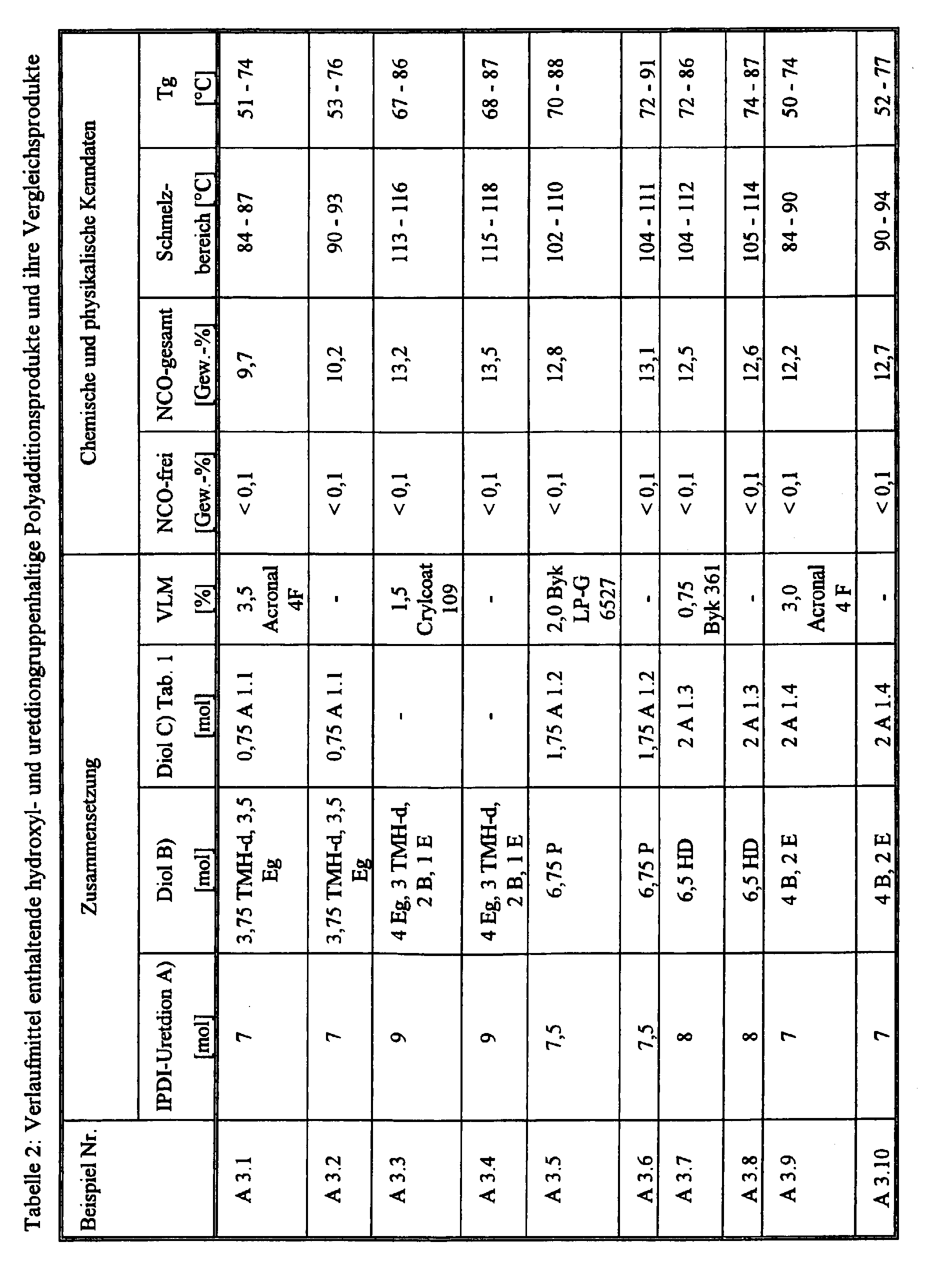

Die Abkürzungen in der Tabelle 2 bedeuten:
- B:: Butandiol-1,4
- E:: Ethylenglycol
- Eg:: Hydroxypivalinsäureneopentylglykolester
- HD:: Hexandiol-1,6
- P:: Pentandiol-1,5
- TMH-d:: 2,2,4 (2,4,4)-Trimethylhexandiol- 1,6
- Tg:: Glasumwandlungstemperatur
- VLM:: Verlaufmittel in Gew. -% bezogen auf die Zusammensetzung

### B Polyester

Die folgende Tabelle 3 gibt einen Überblick über die zur Formulierung von PUR-Pulverlacken eingesetzten Markt-Polyester.

**Tabelle 3**

| Kommerziell erhältliche Polyester | | | | | | | |
|---|---|---|---|---|---|---|---|
| Beisp. B | Hersteller Land | Bezeichnung | Chemische und physikalische Kenndaten | | | | |
| | | | OH-Zahl mg KOH/g | Säurezahl mg KOH/g | Schmelzbereich °C | Glasumwandlungstemperatur °C | Viskosität bei 160°C mPa·s |
| 1 | Hoechst AG Italien | Alftalat AN 739 | 55-60 | 2-4 | 82 - 90 | > 50 | 24-29 000 |
| 2 | DSM Niederlande | Uralac P 1460 | 38-41 | 4-4,5 | 70-75 | 50 | 40 000 |
| 3 | UCB Belgien | Crylcoat 240 | 26-31 | 3-4 | 74-80 | > 50 | 33-38 000 |

### C Polyurethan-Pulverlacke

### Allgemeine Herstellungsvorschrift

Die zerkleinerten Produkte, d. h. Verlaufmittel enthaltenden hydroxyl- und uretdiongruppenhaltigen Polyadditionsprodukte, Polyester, Verlaufmittel-Masterbatch, ggf. Katalysatoren, werden ggf. mit dem Weißpigment in einem Kollergang innig vermischt und anschließend in einem Einschneckenextruder der Fa. Buss bis maximal 130 °C homogenisiert. Nach dem Erkalten wird das Extrudat gebrochen und mit einer Stiftmühle auf eine Korngröße < 100 µm gemahlen. Das so hergestellte Pulver wird mit einer elektrostatischen Pulverspritzanlage bei 60 KV auf entfettete, ggf. vorbehandelte Eisenbleche appliziert und in einem Umlufttrockenschrank bei Temperaturen zwischen 160 und 200 °C eingebrannt.

### Verlaufmittel-Masterbatch

Es werden 10 Gewichtsprozent des Verlaufmittels - ein handelsübliches Copolymer von Butylacrylat und 2-Ethylhexylacrylat - in dem entsprechenden Polyester in der Schmelze homogenisiert und nach dem Erstarren zerkleinert.

### Katalysator-Masterbatch

Es werden 5 Gewichtsprozent des Katalysators DBTL in dem entsprechenden Polyester in der Schmelze homogenisiert und nach dem Erstarren zerkleinert.

Die Abkürzungen in den folgenden Tabellen bedeuten:
SD = Schichtdicke in µm
HK = Härte nach König (sec) (DIN 53 157)
HB = Härte nach Buchholz (DIN 53 153)
ET = Tiefung nach Erichsen (DIN 53 156)
GS = Gitterschnittprüfung (DIN 53 151)
GG 60° -Winkel = Messung des Glanzes n. Gardner (ASTM-D 5233)
Imp rev. = Impact reverse in inch·lb (DIN EN-ISO 6272)

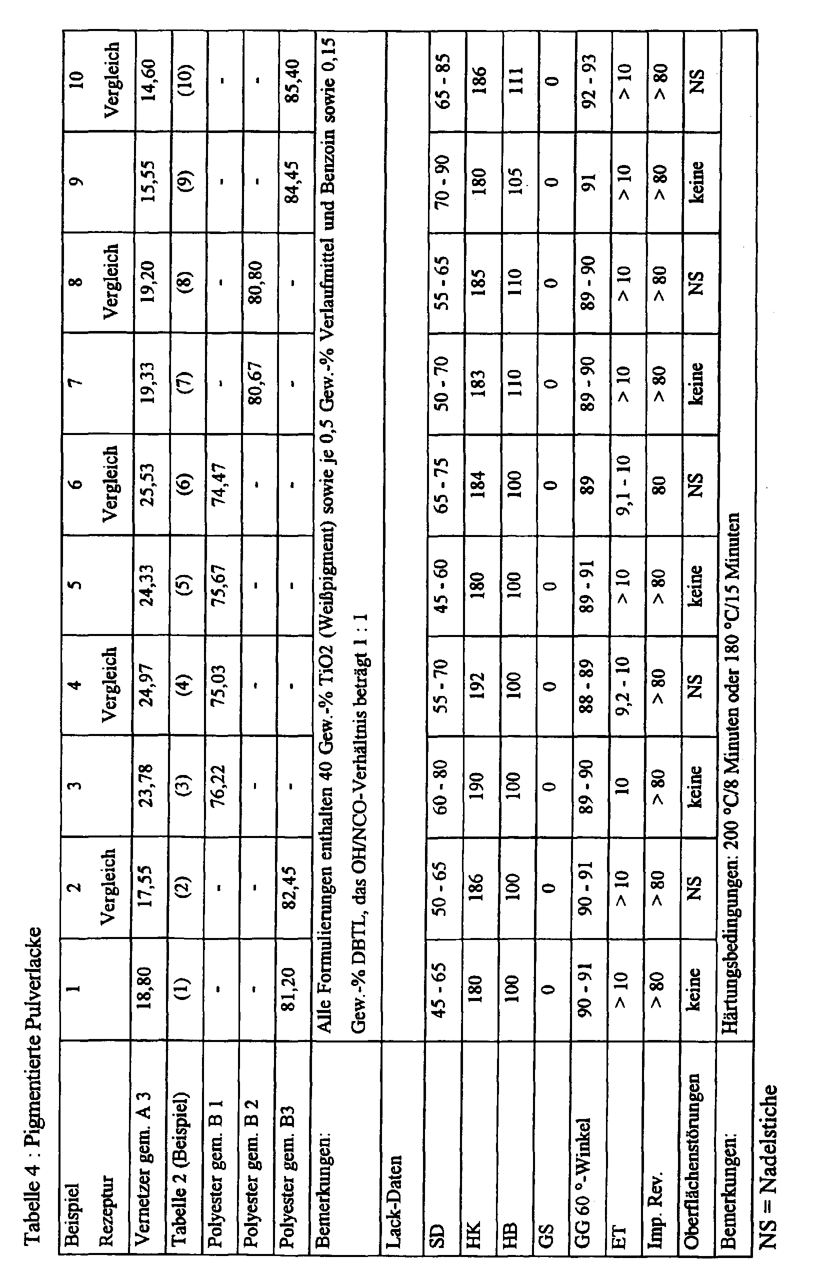

## Patentansprüche

1. Verlaufmittel enthaltende hydroxyl- und uretdiongruppenhaltige Polyadditionsprodukte, aufgebaut aus den Ausgangskomponenten
A) 40 bis 81 Gew.-% Uretdion des Isophorondiisocyanats,
B) aliphatische und/oder cycloaliphatische Diole
und/oder
C) weitere funktionelle Gruppen enthaltende Diole,
in einer Gesamtmenge von 59,9 bis 14 Gew.-%, wobei das Mischungsverhältnis B) zu C) frei wählbar ist, und eine Komponente auch allein enthalten sein kann,
und
D) 0,1 bis 5 Gew.-% mindestens eines Verlaufmittels,
wobei die Polyadditionsprodukte terminal Hydroxylgruppen tragen, eine Funktionalität von 2 aufweisen und die zahlenmittleren Molmassen zwischen 1 500 und 10 000 variieren.

2. Verlaufmittel enthaltende hydroxyl- und uretdiongruppenhaltige Polyadditionsprodukte nach Anspruch 1,
dadurch gekennzeichnet,
daß als Diole B) Ethylenglykol, Butandiol-1,4, Pentandiol-1,5, Hexandiol-1,6, 3-Methylpentandiol-1,5, 2,2,4 (2,4,4)-Trimethylhexandiol oder Hydroxypivalinsäureneopentylglykolester eingesetzt werden.

3. Verlaufmittel enthaltende hydroxyl- und uretdiongruppenhaltige Polyadditionsprodukte nach den Ansprüchen 1 bis 2,
dadurch gekennzeichnet,
daß als weitere funktionelle Gruppen enthaltende Diole C) lineare hydroxylgruppenhaltige Polyester mit einer zahlenmittleren Molmasse zwischen 250 und 2 000 eingesetzt werden.

4. Verlaufmittel enthaltende hydroxyl- und uretdiongruppenhaltige Polyadditionsprodukte nach den Ansprüchen 1 bis 2,
dadurch gekennzeichnet,
daß als weitere funktionelle Gruppen enthaltende Diole C) lineare hydroxylgruppenhaltige Polycaprolactone, Polycarbonate, Polyether, Polythioether, Polyesteramide, Polyurethane und/oder Polyacetale mit einem zahlenmittleren Molekulargewicht von 134 bis 3 500 eingesetzt werden.

5. Verlaufmittel enthaltende hydroxyl- und uretdiongruppenhaltige Polyadditionsprodukte nach den Ansprüchen 1 bis 4,
dadurch gekennzeichnet,
daß die Diole B) und C) im Gewichtsverhältnis von 5 : 95 bis 90 : 10 eingesetzt werden.

6. Verlaufmittel enthaltende hydroxyl- und uretdiongruppenhaltige Polyadditionsprodukte nach Ansprüchen 1 bis 5,
dadurch gekennzeichnet,
daß als Verlaufmittel D) flüssige oder feste Additive auf der Basis von Polyacrylaten oder Siliconen eingesetzt werden.

7. Verlaufmittel enthaltende hydroxyl- und uretdiongruppenhaltige Polyadditionsprodukte nach Anspruch 6,
dadurch gekennzeichnet,
daß als Verlaufmittel D) Produkte mit den Handelsnamen Acronal®, Additol®, Byk®, Crylcoat®, Disparlon®, DOW®, DER®, Dynoadd®, Edaplan®, Efka®, EPIKOTE®, Lanco Flow®, Modaflow®, Perenol®, Resiflow® oder Troy® eingesetzt werden.

8. Verlaufmittel enthaltende hydroxyl- und uretdiongruppenhaltige Polyadditionsprodukte nach Anspruch 7,
dadurch gekennzeichnet,
daß als Verlaufmittel D) Acronal® 4F, Byk®-356, Byk®-361, Byk® LP-G 6527, Crylcoat® 109, Perenol® F 45, Resiflow® FL 2, Resiflow® FM 4, Resiflow® PV 5, Resiflow® PV 88 oder Resiflow® CP 77 eingesetzt werden.

9. Verfahren zur Herstellung der Verlaufmittel enthaltenden hydroxyl- und uretdiongruppenhaltigen Polyadditionsprodukte nach den Ansprüchen 1 bis 8,
dadurch gekennzeichnet,
daß 40 bis 81 Gew.-% des Uretdions des Isophorondiisocyanats A) in Gegenwart von 0,1 bis 5 Gew.-% eines oder mehrerer Verlaufmittel D) mit 59,9 bis 14 Gew.-% Diolen B) und/oder weitere funktionelle Gruppen enthaltende Diole C) bei Temperaturen von 50 bis 190 °C umgesetzt werden, wobei die Polyadditionsprodukte Hydroxylgruppen tragen, eine Funktionalität von 2 aufweisen und die zahlenmittleren Molmassen zwischen 1 500 und 10 000 liegen.

10. Verfahren nach Anspruch 9,
dadurch gekennzeichnet,
daß die Umsetzung der Verbindungen A) bis D) in Lösung erfolgt und dieses nach erfolgter Reaktion entfernt wird.

11. Verfahren nach Anspruch 9,
dadurch gekennzeichnet,
daß die Umsetzung der Verbindungen A) bis D) lösemittelfrei im Intensivkneter erfolgt.

12. Verfahren nach Anspruch 9,
dadurch gekennzeichnet,
daß die Umsetzung der Verbindungen A) bis D) lösemittelfrei im Ein- oder Mehrschneckenextruder erfolgt.

13. Verfahren nach den Ansprüchen 9 bis 12, dadurch gekennzeichnet,
daß zur Umsetzung Katalysatoren in einer Konzentration von 0,01 bis 1 Gew.-%, bezogen auf die eingesetzten Rohstoffe, eingesetzt werden.

14. Verwendung der Verlaufmittel enthaltenden hydroxyl- und uretdiongruppenhaltigen Polyadditionsprodukte nach den Ansprüchen 1 bis 8,
in Kombination mit funktionelle Gruppen enthaltenden Polymeren zur Herstellung von abspaltfreien transparenten oder pigmentierten Polyurethan-Pulverlacken.

15. Abspaltfreie, transparente oder pigmentierte Polyurethan-Pulverlacke,
dadurch gekennzeichnet,
daß sie Verlaufmittel enthaltende hydroxyl- und uretdiongruppenhaltigen Polyadditionsprodukte gemäß den Ansprüchen 1 bis 8, funktionelle Gruppen enthaltende Polymere und weitere Hilfs- und Zuschlagstoffe enthalten.

16. Abspaltfreie, transparente oder pigmentierte Polyurethan-Pulverlacke nach Anspruch 15,
dadurch gekennzeichnet,
daß als Hilfs- und Zuschlagstoffe Verlaufmittel eingesetzt werden.

17. Abspaltfreie, transparente oder pigmentierte Polyurethan-Pulverlacke nach Anspruch 16,
dadurch gekennzeichnet,
daß die Verlaufmittel in einer Konzentration von 0,01 bis 3 Gew.-%, bezogen auf die gesamte Menge des Pulverlackes, enthalten sind.

18. Abspaltfreie, transparente oder pigmentierte Polyurethan-Pulverlacke nach den Ansprüchen 15 bis 17,
dadurch gekennzeichnet,
daß hydroxylgruppenhaltige Polymere eingesetzt werden und ein OH/NCO-Verhältnis von 1 : 0,5 bis 1,2 zugrunde liegt.

19. Abspaltfreie, transparente oder pigmentierte Polyurethan-Pulverlacke nach Anspruch 18,
dadurch gekennzeichnet,
daß ein OH/NCO-Verhältnis von 1 : 0,8 bis 1,1 zugrunde liegt.

20. Abspaltfreie, transparente oder pigmentierte Polyurethan-Pulverlacke nach Anspruch 18,
dadurch gekennzeichnet,
daß ein OH/NCO-Verhältnis von 1 : 1 zugrunde liegt.

21. Abspaltfreie, transparente oder pigmentierte Polyurethan-Pulverlacke nach den Ansprüchen 18 bis 20,
dadurch gekennzeichnet,
daß die hydroxylgruppenhaltigen Polymeren eine Funktionalität > 2, eine OH-Zahl von 20 bis 200 mg KOH/g, eine Viskosität bei 160 °C von < 60 000 mPa·s und einen Schmelzpunkt ≥ 70 °C und ≤ 120 °C aufweisen.

22. Abspaltfreie, transparente oder pigmentierte Polyurethan-Pulverlacke nach den Ansprüchen 15 bis 21,
dadurch gekennzeichnet,
daß den PUR-Pulverlacken Katalysatoren m einer Konzentration von 0,03 bis 0,5 Gew.-%, bezogen auf die gesamte Pulverlackmenge, zugesetzt werden.

23. Abspaltfreie, transparente oder pigmentierte Polyurethan-Pulverlacke nach den Anspruch 22,
dadurch gekennzeichnet,
daß den PUR-Pulverlacken organische Zinnverbindungen in einer Konzentration von 0,03 bis 0,5 Gew.-%, bezogen auf die gesamte Pulverlackmenge, zugesetzt werden.
